# EUROPÄISCHE PATENTSCHRIFT

(11) **EP 2 298 142 B1**
(45) Veröffentlichungstag und Bekanntmachung des Hinweises auf die Patenterteilung: **12.10.2011**
(21) Anmeldenummer: 10009222.0
(22) Anmeldetag: 06.09.2010
(51) Int. Cl.: A47J 31/44

(54) **Vorrichtung und Verfahren zum Aufschäumen eines flüssigen Lebensmittels, insbesondere von Milch**
Device and method for foaming liquid food, in particular milk
Dispositif et procédé de moussage d'un aliment liquide, notamment du lait

(30) Priorität: 18.09.2009 DE 102009041809
(43) Veröffentlichungstag der Anmeldung: 23.03.2011
(73) Patentinhaber: FRANKE Kaffeemaschinen AG, 4663 Aarburg (CH)
(72) Erfinder:
(74) Vertreter: Lemcke, Brommer & Partner

(56) Entgegenhaltungen:
- EP-A2- 1 593 330
- WO-A1-2008/083941

## Beschreibung

Die Erfindung betrifft eine Vorrichtung und ein Verfahren zum Aufschäumen eines flüssigen Lebensmittels, insbesondere von Milch, gemäß Anspruch 1 und Anspruch 11.

Zum Aufschäumen eines flüssigen Lebensmittels sind Vorrichtungen bekannt, bei denen in einer Aufschäumkammer das flüssige Lebensmittel, Dampf und Luft vermischt werden, so dass das flüssige Lebensmittel aufgeschäumt wird und über einen Auslass ausgegeben werden kann.

Insbesondere bei Kaffeemaschinen ist es beispielsweise zur Zubereitung von Cappuccino bekannt, mit solchen Vorrichtungen Milch aufzuschäumen. Typischer Weise wird hierbei die Luft und/oder die Milch mittels des Venturieffekts aufgrund der Dampfströmung angesaugt.

Beispielsweise ist in EP 00 243 326 A2 eine Vorrichtung zum Aufschäumen von Milch beschrieben, bei der eine Milch-, eine Dampf- und eine Luftzuleitung mit einer Aufschäumkammer verbunden sind. Milch und Luft werden mittels des Venturieffektes aufgrund der Dampfströmung angesaugt. Die Vorrichtung weist handbetätigbare Drosselventile zur Regulierung des Luft- und des Milchflusses. auf.

Aufgrund der großen Beliebtheit von Kaffeemischgetränken, insbesondere von Kaffee-Milch-Mischgetränken finden Vorrichtungen zum Aufschäumen von flüssigen Lebensmitteln eine immer breitere Verwendung. Insbesondere in der Gastronomie bestehen daher hohe Anforderungen an die Qualität des erzeugten Schaumes.

Weiterhin werden zunehmend auch kalte Mischgetränke gewünscht, welche aufgeschäumte flüssige Lebensmittel enthalten. Zur Erzeugung von kaltem Milchschaum ist es aus der WO 2008/083941 A1 bekannt, Milch mittels einer Pumpe zu einer Drossel zu fördern und anschließend wahlweise zur Erzeugung von kaltem Milchschaum direkt über einen Auslass auszugeben oder zur Erzeugung von warmem Milchschaum zunächst durch einen Durchlauferhitzer zu leiten und anschließend über einen Auslass auszugeben.

Auch bei kaltem Milchschaum ist es gewünscht, dass dieser eine gleichmäßige Feinporigkeit und damit Dauerhaftigkeit aufweist. Aufgrund der unterschiedlichen gewünschten Schaumarten unter unterschiedlichen Ausgangsmaterialien, wie beispielsweise Milch mit unterschiedlicher Temperatur oder Fettgehalt sowie andere flüssige Lebensmittel mit unterschiedlichen Viskositäten erweist sich die Herstellung der jeweils gewünschten Schaumarten als schwierig.

Der Erfindung liegt somit die Aufgabe zugrunde, eine Vorrichtung und ein Verfahren zum Aufschäumen eines flüssigen Lebensmittels zu schaffen, die für den Benutzer das Aufschäumen des flüssigen Lebensmittels zur Herstellung von kaltem Schaum einer gewünschten Konsistenz vereinfacht, insbesondere hinsichtlich verschiedener gemischter Schaumkonsistenzen und/oder verschiedener Ausgangsparameter des flüssigen Lebensmittels, wie beispielsweise Temperatur, Fettgehalt oder Viskosität. Weiterhin soll sich die erfindungsgemäße Vorrichtung durch einen robusten und kostengünstigen Aufbau auszeichnen.

Gelöst sind diese Aufgaben durch eine Vorrichtung gemäß Anspruch 1 sowie ein Verfahren gemäß Anspruch 11. Vorteilhafte Ausgestaltungen der Vorrichtung finden sich in den Ansprüchen 2 bis 10 und des erfindungsgemäßen Verfahrens in den Ansprüchen 11 bis 15.

Die erfindungsgemäße Vorrichtung zum Aufschäumen eines flüssigen Lebensmittels, insbesondere von Milch, umfasst somit eine Pumpe, welche saugseitig eine mit einem Vorratsbehältnis für das flüssige Lebensmittel fluidleitend verbindbare Förderleitung aufweist. Saugseitig der Pumpe ist im Flussweg des flüssigen Lebensmittels eine Luftzuleitung angeordnet, mittels derer Luft dem Lebensmittel zuführbar ist. Weiterhin ist stromabwärts der Pumpe im Flussweg des Lebensmittels eine Drossel angeordnet. Wie bereits aus dem Stand der Technik bekannt, wird zur Erzeugung von kaltem Schaum saugseitig der Pumpe Luft dem flüssigen Lebensmittel zugeführt und druckseitig der Pumpe erfolgt stromabwärts der Drossel eine Expansion des Lebensmittel-Luft-Gemischs, so dass kalter Schaum erzeugt wird.

Wesentlich ist, dass im Unterschied zu vorbekannten Vorrichtungen die erfindungsgemäße Vorrichtung eine Steuereinheit und die Luftzuleitung ein mittels der Steuereinheit steuerbares Luftventil umfasst. Das Luftventil ist ein intermittierendes Luftventil, das heißt, dass mittels der Steuereinheit wahlweise mindestens ein Zustand mit hohem Luftdurchfluss und ein Zustand mit dem gegenüber geringerem Luftdurchfluss und/oder mit keinem Luftdurchfluss vorgebbar ist. Steuereinheit und Luftventil sind derart zusammenwirkend ausgestaltet, dass der mittlere Luftdurchfluss des Luftventils durch wiederholtes Umschalten zwischen den mindestens zwei Zuständen des Luftventils steuerbar ist.

Die erfindungsgemäße Vorrichtung weist somit zum einen den Unterschied zu der vorbekannten Vorrichtung auf, dass mittels einer Steuereinheit ein Luftventil in der Luftzuleitung steuerbar ist. Hiermit kann somit automatisch der Luftzufluss gesteuert werden, so dass beispielsweise eine Steuerung abhängig von dem Ausgangsprodukt und/oder der Temperatur oder anderen Parametern des Ausgangsproduktes und/oder abhängig von der gewünschten Art und Konsistenz des herzustellenden Schaumes in einfacher Weise durch die Steuereinheit vorgebbar ist.

Zum Anderen unterscheidet sich die erfindungsgemäße Vorrichtung dadurch, dass der Luftdurchfluss des Luftventils durch wiederholtes Umschalten zwischen mindestens zwei Zuständen des Luftventils gesteuert wird. Es erfolgt somit keine Steuerung des Luftflusses durch ein Drosselventil, stattdessen wird zwischen mindestens zwei Zuständen des Luftventils mit unterschiedlichem Luftdurchfluss wiederholt umgeschaltet, so. dass sich im Mittel der gewünschte Luftdurchfluss ergibt.

Untersuchungen der Anmelderin haben ergeben, dass insbesondere die vorgenannte Art der Steuerung des Luftdurchflusses eine gegenüber der Verwendung von Drosselventilen wesentlich exaktere und einfacher realisierbare hochgenaue Steuerung des gewünschten Luftdurchflusses ermöglicht. Darüber hinaus hat die "Taktung" des Luftflusses durch das wiederholte Umschalten zwischen den mindestens zwei Zuständen des Luftventils einen positiven Effekt auf die Schaumentwicklung. Insbesondere bei der Erzeugung von kaltem Milchschaum ist die genau dosierbare Zugabe von Luft wesentlich, da im Vergleich zur Erzeugung von warmem Schaum nicht ein weiterer Kontrollparameter wie beispielsweise die Erhitzungstemperatur oder Temperatur und Menge von zugeführtem Dampf zur Regelung zur Verfügung stehen. Weiterhin zeigt die Taktung der Luft insbesondere bei Erzeugung von kaltem Milchschaum einen positiven Effekt auf die Schaumbildung.

Vorzugsweise weist das Luftventil zwei Zustände auf, einen im Wesentlichen geschlossenen und einen geöffneten Zustand. Vorzugsweise ist der erstgenannte Zustand ein vollständig geschlossener Zustand, das heißt, bei dem kein Luftdurchfluss durch das Luftventil erfolgt. Bauartbedingt oder aufgrund der Schaltzeiten kann jedoch auch bei "geschlossenem" Zustand ein geringfügiger Luftdurchfluss erfolgen. Der mittlere Luftdurchfluss des Luftventils wird hierbei durch wiederholtes Umschalten zwischen geschlossenem und geöffnetem Zustand gesteuert. Insbesondere ist die Verwendung von Magnetventilen vorteilhaft, denn solche Ventile sind bereits in unterschiedlichen Ausführungsformen erhältlich und ermöglichen hohe Schaltfrequenzen zwischen geschlossenem und offenem Zustand.

In einer vorteilhaften Ausgestaltung sind- Steuereinheit und Luftventil-derart zusammenwirkend ausgestaltet, dass der mittlere Luftdurchfluss des Luftventils steuerbar ist durch Vorgabe einer Umschaltfrequenz, mit der zwischen den mindestens zwei Zuständen des Luftventils umgeschaltet wird und/oder durch Vorgabe eines Tastverhältnisses zwischen den mindestens zwei Zuständen. Das Tastverhältnis beschreibt das Zeitverhältnis, in dem nach wiederholtem Umschalten ein Zustand des Luftventils zu den anderen Zuständen steht. Bei lediglich zwei Schaltzuständen wird das Tastverhältnis üblicherweise in einer Prozentangabe DC (duty cycle) angegeben. Ein Tastverhältnis von 5 % DC bedeutet somit bei einem Luftventil mit einem offenen und einem geschlossenen Zustand, dass im Mittel für 5 % der Zeitdauer das Luftventil geöffnet ist und für 95 % der Zeitdauer das Luftventil geschlossen ist.

Untersuchungen der Anmelderin haben ergeben, dass insbesondere durch Vorgabe des Tastverhältnisses eine exakte Vorgabe unterschiedlicher Schaumkonsistenzen, insbesondere unterschiedlicher Schaumvolumina bei gleichem Gesamtgewicht des ausgegebenen Lebensmittels erzielbar sind. Mit der erfindungsgemäßen Vorrichtung kann somit über Vorgabe des Tastverhältnisses durch die Steuereinheit die Konsistenz des erzeugten Schaumes, insbesondere die mittlere Größe der Schaumporen in einfacher und genau reproduzierbarer Weise vorgegeben werden.

Untersuchungen der Anmelderin haben ergeben, dass vorzugsweise Luftventil und Steuereinheit derart ausgeführt sind, dass mittels der Steuereinheit eine Umschaltfrequenz im Bereich von 1 Hz bis 50 Hz, vorzugsweise im Bereich von 1 Hz bis 20 Hz, im weiteren vorzugsweise im Bereich von 5 bis 15 Hz, insbesondere eine Frequenz von etwa 10 Hz vorgebbar ist. Denn die typischen Ventile, insbesondere Magnetventile, zeigen bei den angegebenen Frequenzbereichen die besten Schaumergebnisse, insbesondere ist somit ein Betreiben eines Magnetventils bei einer Frequenz von etwa 10 Hz vorteilhaft.

Wie zuvor erwähnt, ist insbesondere die Steuerung einer gewünschten Schaumkonsistenz durch Vorgabe des Tastverhältnisses vorteilhaft. Untersuchungen der Anmelderin haben ergeben, dass vorzugsweise Luftventil und Steuereinheit derart ausgeführt sind, das mittels der Steuereinheit ein Tastverhältnis zwischen geöffnetem und geschlossenem Zustand des Luftventils im Bereich von DC 2 % bis DC 80 %, vorzugsweise im Bereich von DC 5% bis DC 60 % vorgebbar ist. Weiterhin ist vorteilhafterweise ein Tastverhältnis zwischen geöffnetem und geschlossenem Zustand des Luftventils im Bereich von DC 2 % bis DC 90 %, vorzugsweise von DC 5 % bis DC 70 % vorgebbar. Durch die vorgenannten Bereiche ergibt sich eine Optimierung des vorgegebenen Wertebereiches für das Tastverhältnis und der Änderung der Schaumkonsistenz, insbesondere des Schaumvolumens in Abhängigkeit der Änderung des Tastverhältnisses.

Die Luftzuführung erfolgt vorzugsweise mittels des Venturieffektes. Hierzu ist die Luftzuleitung vorzugsweise derart ausgeführt und/oder angeordnet, dass mittels des Venturieffektes aufgrund der Strömung des flüssigen Lebensmittels Luft zuführbar ist.

Ebenso liegt die aktive Luftzuführung, beispielsweise mittels einer Pumpe, im Rahmen der Erfindung. Die passive Luftzuführung mittels des Venturieffektes weist jedoch den Vorteil auf, dass keine zusätzlichen Komponenten zur Luftzuführung notwendig sind.

Mittels der erfindungsgemäßen Vorrichtung sind somit einerseits unterschiedliche Schaumkonsistenzen und andererseits vorgegebene Schaumkonsistenzen für unterschiedliche Ausgangsmedien mit unterschiedlichen Temperaturen und/oder Viskositäten oder sonstigen Parametern erzielbar.

Vorzugsweise ist die Steuereinheit daher programmierbar ausgestaltet, so dass zu verschiedenen Getränkeprodukten jeweils Parameter für die Schaumerzeugung in der Steuereinheit speicherbar und/oder werkseitig unabänderlich vorgebbar sind. Diese Parameter umfassen vorzugsweise einen oder mehrere Parameter aus der Gruppe Umschaltfrequenz, Tastverhältnis, Aufschäumdauer, Schaummenge und/oder zugemischte Kaffeemenge sowie Ablauf der Getränkezubereitung, d. h. einen oder mehrere Zeitpunkte und/oder Zeitdauern der Zugabe des Kaffees und einen oder mehrere Zeitpunkte und/oder Zeitdauern der Zugabe des Schaums. Hierdurch ist für unterschiedliche Getränkeprodukte der vollautomatische Ablauf deren Herstellung vorgebbar, beispielsweise Reihenfolge der Zugabe von Kaffee und Schaum, die jeweiligen Mengenverhältnisse sowie der Parameter zur Schaumerzeugung. Vorzugsweise ist die Steuereinheit daher zusätzlich mit einer Vorrichtung zur Erzeugung von Kaffee verbunden, so dass die Erzeugung und/oder Ausgabe des Kaffees ebenfalls mittels der Steuereinheit steuerbar ist.

Vorteilhafterweise umfasst die Steuereinheit somit eine Speichereinheit zur Speicherung mindestens eines Aufschäummodus, wobei der Aufschäummodus eine Umschaltfrequenz und/oder ein Tastverhältnis umfasst. Durch Vorgabe eines Aufschäummodus ist somit aufgrund der exakten Steuerung der Luftzufuhr eine gleich bleibende Schaumkonsistenz gewährleistet. Weiterhin ist bei Speicherung mehrerer Aufschäummodi eine für den Benutzer besonders einfache Herstellung unterschiedlicher Schaumkonsistenzen und/oder Verwendung unterschiedlicher flüssiger Lebensmittel bzw. flüssiger Lebensmittel mit unterschiedlichen Parametern möglich. Vorzugsweise umfasst die Vorrichtung daher eine Eingabeeinheit, mittels derer der Benutzer einen vorgegebenen Aufschäummodus auswählt, so dass die Steuereinheit die Vorrichtung mit den zu diesem Aufschäummodus gespeicherten Parametern steuert. Alternativ oder zusätzlich ist es vorteilhaft, dass die Steuereinheit mit mindestens einem Detektor verbunden ist, beispielsweise zur Messung der Temperatur und/oder des Fettgehalts des aufzuschäumenden flüssigen Lebensmittels. Abhängig von den Messdaten des Detektors erfolgt in der Steuereinheit eine Zuordnung zu einem entsprechendem Aufschäummodus oder einer Gruppe entsprechender Aufschäummodi, so dass unabhängig von dem Benutzer und unabhängig von beispielsweise Temperatur und/oder Fettgehalt des flüssigen Lebensmittels stets ein Schaum mit der gewünschten Konsistenz erzeugt wird. Ebenso liegt es im Rahmen der Erfindung, dass Parameter des flüssigen Lebensmittels, wie beispielsweise Temperatur, Fettgehalt und/oder Viskosität manuell durch den Benutzer über eine Bedieneinheit eingegeben werden und die Steuereinheit einen entsprechenden Aufschäummodus oder eine Gruppe entsprechender Aufschäummodi auswählt.

Bei Zuordnung von Parametern zu einer Gruppe von Aufschäummodi erfolgt die Auswahl des anzuwendenden Aufschäummodus aus dieser Gruppe vorzugsweise durch den Benutzer mittels einer Bedieneinheit.

Die Vorgabe der Aufschäummodi erfolgt vorzugsweise werksseitig, ebenso liegt jedoch auch die Möglichkeit, dass der Benutzer eigene Aufschäummodi abspeichert oder bestehende Aufschäummodi abändert, im Rahmen der Erfindung.

Durch die Steuerung des Luftdurchflusses mittels einer Steuereinheit und insbesondere die hochgenaue Steuerung bei der erfindungsgemäßen Vorrichtung ist es weiterhin möglich, während des Aufschäumvorgangs in kontrollierter Weise die Konsistenz des Schaums zu verändern. So kann beispielsweise ein Schaum mit sich kontinuierlich ändernder Konsistenz, insbesondere der mittleren Größe der Schaumporen und/oder automatisch ein Schichtsystem aus Schaumschichten mit unterschiedlicher Konsistenz, insbesondere unterschiedlicher mittlerer Größe der Schaumporen, erzeugt werden.

Vorzugsweise weist daher mindestens ein Aufschäummodus zwei unterschiedliche Werte für die Umschaltfrequenz und/oder das Tastverhältnis auf, wobei jedem Wertepaar eine Zeitdauer zu dessen Anwendung zugeordnet ist. Vorzugsweise ist bei einem Aufschäummodus eine konstante Umschaltfrequenz vorgegeben und mehrere, sich nach vorgegebenen Zeitdauern stufenartig oder kontinuierlich verändernde Tastverhältnisse. Hierdurch ist die automatische Erzeugung von optisch und geschmacklich interessanten Schaumschichtsystemen möglich.

Vorteilhafterweise ist die Steuervorrichtung mit der Pumpe verbunden und diese sind derart zusammenwirkend ausgestaltet, dass die Fördermenge der Pumpe mittels der Steuervorrichtung steuerbar ist. Hierdurch kann somit einem gewünschten Schaumprodukt nicht nur ein exakter Luftdurchfluss des Luftventils, sondern zusätzlich auch eine exakte Zufuhr des flüssigen Lebensmittels, insbesondere auch einer variierende Fördermenge vorgegeben werden.

Untersuchungen der Anmelderin haben gezeigt, dass insbesondere die Verwendung einer Zahnradpumpe zur Förderung des flüssigen Lebensmittels vorteilhaft ist, da bei einer Zahnradpumpe in besonders verlässlicher Weise die Fördermenge steuerbar ist. Weiterhin bewirkt eine Zahnradpumpe eine gleichmäßige Vermischung des Lebensmittel-Luft-Gemischs. Ebenso liegt die Verwendung anderer Pumpen im Rahmen der Erfindung, insbesondere haben sich auch Schwingankerpumpen als gut in der erfindungsgemäßen Vorrichtung einsetzbar erwiesen.

Vorzugsweise umfasst ein Aufschäummodus daher zusätzlich eine Aufschäumdauer für den gesamten Aufschäumvorgang, insbesondere zusätzlich eine Aufschäumdauer und mindestens eine Förderleistung der Pumpe.

Das Luftventil ist vorzugsweise derart ausgeführt, dass der Luftdurchfluss des Luftventils durch elektrische Steuersignale steuerbar ist.

Die stromabwärts der Pumpe in Flussweg des Lebensmittels angeordnete Drossel kann als Düse oder als Drosselventil ausgeführt sein. Vorteilhafterweise ist die Drossel als steuerbare Drossel, insbesondere als steuerbares Drosselventil, ausgeführt und mit der Steuereinheit derart verbunden, dass mittels der Steuereinheit wahlweise zumindest zwei unterschiedliche Durchflussquerschnitte für das die Drossel durchströmende flüssige Lebensmittel vorgebbar sind.

Hierdurch kann bei der Erzeugung von kaltem Milchschaum somit zusätzlich mittels der Steuereinheit der Durchflussquerschnitt der Drossel und damit das Expansionsverhalten des Lebensmittel-Luft-Gemischs stromabwärts der Drossel gezielt gesteuert werden.

Vorzugsweise umfassen die zuvor aufgeführten in der Speichereinheit gespeicherten Aufschäummodi daher zusätzlich einen Öffnungszustand und/oder einen Durchflussquerschnitt der Drossel.

In einer weiteren vorzugsweise Ausführungsform umfasst die erfindungsgemäße Vorrichtung zusätzlich eine Aufschäumkammer und eine Dampfzuleitung. Die Dampfzuleitung ist - gegebenenfalls über weitere Zuleitungen - mit der Aufschäumkammer fluidleitend verbunden. Weiterhin ist die Drossel stromabwärts des Flussweges des flüssigen Lebensmittels mit der Aufschäumkammer fluidleitend verbunden.

Diese vorzugsweise Ausführungsform der erfindungsgemäßen Vorrichtung weist den Vorteil auf, dass wahlweise warmer oder kalter Schaum erzeugt werden kann:

Zur Erzeugung von kaltem Schaum wird kein Dampf in die Aufschäumkammer zugeführt und die Erzeugung erfolgt wie vorangehend beschrieben, wovei der kalte Schaum aus einem stromabwärts der Aufschäumkammer angeordnetem Auslass ausgegeben wird. Zur Erzeugung von warmem Milchschaum wird - wie bei aus dem Stand der Technik bekannten Vorrichtungen vorbekannt - die Aufschäumung eines Gemisches aus flüssigem Lebensmittel, Luft und Dampf in der Aufschäumkammer ausgeführt und anschließend der aufgrund der Zuführung von Dampf erwärmte Schaum über einen stromabwärts der Aufschäumkammer angeordneten Auslass ausgegeben. Die Zuführung von Luft erfolgt hierbei vorzugsweise wie zuvor beschrieben über das intermittierende Luftventil saugseitig der Pumpe.

Diese Ausführungsform der erfindungsgemäßen Vorrichtung weist den Vorteil auf, dass mit einem besonders einfachen und daher kostengünstigen und robustem Aufbau wahlweise kalter oder warmer Schaum herstellbar sind. Insbesondere kann zur Herstellung von warmem Schaum auf bisher bereits verwendete Komponenten und Steuerungsparameter zurückgegriffen werden, da die Aufschäumung in der Aufschäumkammer mittels Zuführung von Dampf über die Dampfzuleitung in an sich bekannter Weise erfolgt. Bei Erzeugen von kaltem Schaum erfolgt hingegen keine Zuführung von Dampf; dennoch erfolgt die Ausgabe auch des kaltem Milchschaums über die Aufschäumkammer. Es sind somit insbesondere keine parallelen Leitungsabschnitte notwendig, so dass ein vereinfachter, kostengünstigerer, weniger fehleranfälliger und leichter zu reinigender Aufbau erzielt wird.

Insbesondere ist es vorteilhaft, zusätzlich die Drossel wie zuvor beschrieben steuerbar auszugestalten und die Steuereinheit derart auszuführen, dass bei Erzeugung von warmem Milchschaum die Drossel geöffnet ist, d. h. keinen oder nur einen geringen Durchflusswiderstand aufweist, wohingegen bei Erzeugung von kaltem Milchschaum die Drossel einen demgegenüber geringeren Querschnitt aufweist, der zu einer Expansion des Luft-Lebensmittel-Gemisches stromabwärts der Drossel und dadurch zur Schaumbildung führt.

Hierdurch ergibt sich der Vorteil, dass bei Erzeugung von warmem Milchschaum die Belastung der Pumpe und die notwendige Energieaufnahme der Pumpe durch den geringeren Durchflusswiderstand bei geöffneter Drossel verringert wird und die Erzeugung des warmen Milchschaums vorzugsweise ausschließlich oder wesentlich in der Aufschäumkammer in an sich bekannter Weise erfolgt. Bei Herstellung von kaltem Milchschaum kann hingegen der hierfür optimale Durchflusswiderstand mittels entsprechender Einstellung der Drossel durch die Steuereinheit vorgegeben werden.

Vorzugsweise umfasst die vorangegangen beschriebene vorzugsweise Ausführungsform neben Aufschäumkammer und Dampfzuleitung zusätzlich eine mittels eines zweiten Luftventils wahlweise verschließbare zweite Luftzuleitung. Die zweite Luftzuleitung ist - gegebenenfalls über weitere Zuleitungen - mit der Aufschäumkammer fluidleitend verbunden. Das zweite Luftventil ist derart mit der Steuereinheit zusammenwirkend ausgestaltet, dass mittels der Steuereinheit die Luftzufuhr über die zweite Luftzuleitung wahlweise vorgebbar ist.

Bei dieser vorzugsweisen Ausführungsform kann somit Luft wahlweise saugseitig der Pumpe über das Luftventil und/oder über das zweite Luftventil druckseitig der Pumpe zugeführt werden. Dies weist den Vorteil auf, dass insbesondere zur Erzeugung von warmem Milchschaum auf bekannte Verfahren und Parameter zurückgegriffen werden kann. Insbesondere kann in an sich bekannter Weise in der Aufschäumkammer Milch einerseits und ein Dampf-Luftgemisch andererseits zur Erzeugung von warmem Milchschaum verwendet werden.

Vorzugsweise erfolgt die Erzeugung von kaltem Milchschaum, indem ausschließlich über die saugseitig der Pumpe angeordnete Luftzuleitung Luft zugeführt wird. Die Erzeugung von warmem Milchschaum erfolgt vorzugsweise, indem ausschließlich über die zweite Luftzuleitung druckseitig der Pumpe Luft zugeführt wird.

Vorzugsweise ist die zweite Luftzuleitung derart ausgeführt, dass mittels des Venturieffektes Luft ansaugbar ist. Insbesondere ist die zweite Luftzuleitung vorzugsweise derart mit der Dampfzuleitung verbunden, dass aufgrund der Dampfströmung Luft angesaugt wird.

Vorteilhafterweise sind bei der Ausführungsform der erfindungsgemäßen Vorrichtung zur Erzeugung von warmem oder kaltem Milchschaum das zweite Luftventil und/oder die Dampfzufuhr mittels der Steuereinheit steuerbar. Weiterhin umfasst vorteilhafterweise die zuvor genanntenen in der Speichereinheit gespeicherten Aufschäummodi zusätzlich entsprechende Parameter hinsichtlich des Dampfzuflusses und des Luftzuflusses über die zweite Luftzuleitung.

Weiterhin ist es vorteilhaft, dass das zweite Luftventil analog dem ersten Luftventil oder einer vorteilhaften Ausführung des saugseitig der Pumpe angeordneten Luftventils ausgestaltet ist, d. h., dass sowohl erstes als auch zweites Luftventil intermittierende Luftventile sind. Hierdurch realisieren sich die Vorteile durch Verwendung intermittierender Luftventile sowohl bei der Erzeugung von warmem als auch bei der Erzeugung von kaltem Schaum. Ebenso ist es vorteilhaft, die Steuerung des zweiten Luftventils analog der Steuerung des saugseitig der Pumpe angeordneten Luftventils oder einer vorteilhaften Ausführungsform hiervon auszugestalten, insbesondere eine Schaltfrequenz und ein Tastverhältnis vorzugeben.

Bei der Ausgestaltung der erfindungsgemäßen Vorrichtung zur Erzeugung von kaltem und warmem Milchschaum erfolgt vorzugsweise die Ausgabe beider Schaumarten über denselben Auslass.

Zur Erzeugung von Dampf umfasst die Vorrichtung vorzugsweise einen Dampfgenerator. Auch hier ist es besonders vorteilhaft, wenn der Dampfgenerator mit der Steuereinheit verbunden und derart zusammenwirkend mit dieser ausgestaltet ist, dass zumindest Start- und Endzeitpunkt der Dampfzugabe steuerbar ist. Insbesondere ist es vorteilhaft, dass die zugeführte Dampfmenge mittels der Steuereinheit steuerbar ist. Hierdurch sind somit sämtliche Parameter bei der Schaumherstellung bezüglich Fördermenge des flüssigen Lebensmittels, Dampfzufuhr und Luftzufuhr mittels der Steuereinheit vorgebbar und eine gewünschte Schaumqualität ist damit in hohem Maße reproduzierbar.

Vorzugsweise umfasst hierbei der Aufschäummodus zusätzlich eine Dampfmenge und/oder eine Zeitdauer für die Dampfzufuhr.

Vorzugsweise mündet die Dampfzuleitung unmittelbar in die Aufschäumkammer.

Das Luftventil und/oder das zweite Luftventil ist vorzugsweise derart ausgeführt, dass der Luftdurchfluss des Luftventils durch elektrische Steuersignale steuerbar ist.

Vorzugsweise umfasst die erfindungsgemäße Vorrichtung einen Kühlraum, zur Aufnahme und Kühlung des flüssigen Lebensmittels. Insbesondere ist es vorteilhaft, wenn die erfindungsgemäße Vorrichtung in eine an sich bekannte Kaffeemaschine, insbesondere einen Kaffeevollautomaten integriert ist.

Ebenso liegt die Ausführung der erfindungsgemäßen Vorrichtung als Beistellgerät für eine Kaffeemaschine im Rahmen der Erfindung. Hierbei ist es vorteilhaft, wenn die erfindungsgemäße Vorrichtung einen Steueranschluss zum Verbinden der Steuereinheit mit einer Steuereinheit der Kaffeemaschine umfasst und die Steuereinheit derart ausgebildet ist, dass abhängig von Steuersignalen der Kaffeemaschine eine den Steuersignalen entsprechende Schaumerzeugung erfolgt. In diesem Fall erfolgt die zentrale Steuerung somit ausgehend von der Kaffeemaschine, welche nach Bedarf (d. h. abhängig von dem durch die Kaffeemaschine erzeugten Getränk) Schaum in mittels Steuersignalen vorgebbarer Konsistenz anfordert. Vorzugsweise wird der Schaum über einen Auslass der Kaffeemaschine ausgegeben.

Die Erfindung umfasst weiterhin ein Verfahren zum Aufschäumen eines flüssigen Lebensmittels, insbesondere von Milch gemäß Anspruch 14. Hierbei wird mittels einer Pumpe, welche saugseitig eine mit einem Vorratsbehältnis für das flüssige Lebensmittel fluidleitend verbundene Förderleitung aufweist, das flüssige Lebensmittel gefördert. Weiterhin wird saugseitig der Pumpe mittels einer im Flussweg des flüssigen Lebensmittels angeordnete Luftzuleitung Luft dem Lebensmittel zugeführt und stromabwärts der Pumpe wird das flüssige Lebensmittel durch eine Drossel geleitet. Wesentlich ist, dass mittels einer Steuereinheit ein intermittierendes Luftventil der Luftzuleitung zwischen mindestens einem Zustand mit hohem Luftdurchfluss und einem Zustand mit demgegenüber geringerem Luftdurchfluss und/oder mit keinem Luftdurchfluss wiederholt umgeschaltet wird, zur Steuerung des mittleren Luftdurchflusses des Luftventils.

Vorzugsweise wird das erfindungsgemäße Verfahren mittels einer erfindungsgemäßen Vorrichtung bzw. einer vorteilhaften Ausgestaltung hiervon durchgeführt.

Vorteilhafterweise wird bei dem erfindungsgemäßen Verfahren bei der Regelung des Luftventils mittels der Steuereinheit zwischen einem offenen und einem im Wesentlichen geschlossenen Zustand wiederholt umgeschaltet. Insbesondere ist es vorteilhaft, dass mittels der Steuereinheit eine Schaltfrequenz und/oder ein Tastverhältnis zwischen offenen und geschlossenen Zuständen vorgegeben wird.

Vorzugweise wird während eines Aufschäumvorgangs der Luftdurchfluss des Luftventils nach einem in der Steuereinheit vorgegebenen Verlauf verändert.

Weiterhin ist es vorteilhaft, dass bei dem erfindungsgemäßen Verfahren stromabwärts der Drossel das flüssige Lebensmittel in eine Aufschäumkammer geleitet wird, wobei zur Erzeugung von heißem Milchschaum Luft mittels der saugseitig der Pumpe angeordneten Luftzuleitung und/oder mittels einer zweiten druckseitig der Pumpe angeordneten Luftzuleitung zugeführt wird und der Aufschäumkammer Dampf mittels einer Dampfzuleitung zugeführt wird und zur Erzeugung von kaltem Milchschaum dem flüssigen Lebensmittel saugseitig der Pumpe mittels der Luftzuleitung Luft zugeführt wird und das flüssige Lebensmittel über die Aufschäumkammer ohne Zuführung von Dampf ausgegeben wird.

Insbesondere ist es hierbei vorteilhaft, dass zur Erzeugung von heißem Milchschaum die Drossel geöffnet wird und zur Erzeugung von kaltem Milchschaum die Drossel in einen drosselnden Zustand gesetzt wird, bei dem der Durchflussquerschnitt für das flüssige Lebensmittel durch die Drossel gegenüber dem geöffneten Zustand verringert ist.

Das erfindungsgemäße Verfahren wird vorzugsweise mittels einer erfindungsgemäßen Vorrichtung oder einer vorteilhaften Ausgestaltung hiervon durchgeführt.

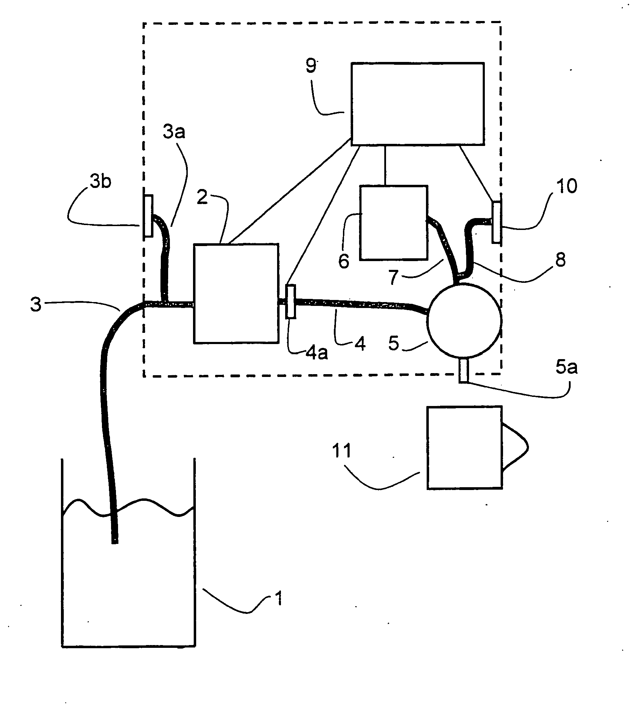

Weitere vorteilhafte Merkmale und vorteilhafte Ausgestaltungen der erfindungsgemäßen Vorrichtung und des erfindungsgemäßen Verfahrens werden im Folgenden anhand der Figur 1 beschrieben. In Figur 1 ist schematisch ein Ausführungsbeispiel einer erfindungsgemäßen Vorrichtung zum Aufschäumen eines flüssigen Lebensmittels dargestellt.

Aus einem Milchbehälter 1 wird mittels einer als Zahnradpumpe ausgeführten Pumpe 2 über eine Förderleitung 3 Milch gefördert. Die Pumpe 2 ist über eine Lebensmittelzuleitung 4 mit einer Aufschäumkammer 5 verbunden.

Wesentlich ist, dass saugseitig der Pumpe 2 über eine Luftzuleitung 3a Luft in die Förderleitung 3 und damit zu dem flüssigen Lebensmittel zuführbar ist. Die Luftzuleitung 3a weist ein als Magnetventil ausgeführtes Luftventil 3b auf, welches mittels einer Steuereinheit 9 steuerbar ist. Die Einmündung der Luftzuleitung 3a in die Förderleitung 3 ist derart ausgeführt, dass die Luft mittels des Venturieffektes aufgrund der Strömung des flüssigen Lebensmittels in der Förderleitung 3 zugeführt wird.

Stromabwärts der Pumpe 2 ist in der Lebensmittelzuleitung 4 eine regelbare Drossel 4a im Flussweg des flüssigen Lebensmittels angeordnet, welche ebenfalls mittels der Steuereinheit 9 steuerbar ist.

Die Vorrichtung weist weiterhin einen Dampfgenerator 6 auf, welcher über eine Dampfzuleitung 7 mit der Aufschäumkammer 5 verbunden ist. In die Dampfzuleitung 7 einmündend ist eine zweite Luftzuleitung 8 angeordnet, wobei die Einmündung derart ausgeführt ist, dass aufgrund der Dampfströmung Luft mittels des Venturieffektes aus der zweiten Luftzuleitung angesaugt und in die Aufschäumkammer 5 eingeleitet wird.

Weiterhin weist die zweite Luftzuleitung ein als Magnetventil ausgeführtes, zweites Luftventil 10 auf. Das erzeugte Schaumprodukt wird über einen Auslass 5a in ein Behältnis, wie beispielsweise eine Tasse 11 ausgegeben.

Die Steuereinheit 9 ist weiterhin mit dem zweiten Luftventil 10, dem Dampfgenerator 6 und der Pumpe 2 verbunden, so dass mittels der Steuereinheit somit Fördermenge und Fördergeschwindigkeit des flüssigen Lebensmittels, Dampfmenge und Dampffluss, Luftmenge und Luftdurchfluss sowohl hinsichtlich der Luftzuleitung 3a als auch hinsichtlich der zweiten Luftzuleitung 8 und Durchflussquerschnitt in der Lebensmittelzuleitung 4 an der Drossel 4a bei einem Aufschäumvorgang steuerbar sind.

Hierzu umfasst die Steuereinheit 9 eine Speichereinheit, in der mehrere Aufschäummodi gespeichert sind, die entsprechende Parameter für die zuvor genannten Komponenten umfassen. Insbesondere sind für das Luftventil 3b und das zweite Luftventil 10 jeweils mindestens eine Umschaltfrequenz sowie mindestens ein Tastverhältnis vorgegeben.

Über eine (nicht dargestellte) Bedieneinheit kann ein Benutzer ein gewünschtes Schaumprodukt auswählen. Die Steuereinheit 9 steuert entsprechend der Werte des zugeordneten Aufschäummodus die einzelnen Komponenten.

Wählt der Benutzer beispielsweise kalten Milchschaum aus, so wird Dampfgenerator 6 deaktiviert und das zweite Luftventil 10 geschlossen, wohingegen mittels einer vorgegebenen Umschaltfrequenz und einem vorgegebenen Taktverhältnis eine Luftzuleitung über Luftventil 3b und Luftzuleitung 3a aktiviert wird und die Drossel 4a auf einen verringerten Durchflussquerschnitt gesetzt wird. Bei Aktivieren der Pumpe 2 durch die Steuereinheit 9 erfolgt somit zum Einen saugseitig der Pumpe aufgrund des Venturieffektes Luftzufuhr mit einer genau definierten Flussgeschwindigkeit aufgrund des vorgegebenen Tastverhältnisses und der vorgegebenen Umschaltfrequenz des Luftventils 3b. Weiterhin erfolgt aufgrund des verringerten Durchflussquerschnittes bei Drossel 4a eine Expansion des Milch-Luftgemisches in dem stromabwärts der Drossel 4a gelegenen Bereich der Lebensmittelzuleitung 4 und in der Aufschäumkammer 5. Die Ausgabe des kalten Milchschaums erfolgt über den Auslass 5a in die Tasse 11.

Wählt der Benutzer hingegen warmen Milchschaum aus, so wird mittels der Steuereinheit 9 das Luftventil 3b geschlossen, die Drossel 4a geöffnet, so dass kein verringerter Durchflussquerschnitt gegenüber der Lebensmittelzuleitung 4 vorliegt. Die Steuereinheit 9 setzt weiterhin entsprechend der Werte des zugeordneten Aufschäummodus die Pumpe 2 und den Dampfgenerator 6 in Gang und steuert diese entsprechend der vorgegebenen Werte. Weiterhin wird anhand der vorgegebenen Umschaltfrequenz und dem vorgegebenen Tastverhältnis das zweite Luftventil 10 durch die Steuereinheit 9 gesteuert, so dass ein mittlerer Luftdurchfluss gemäß der durch die Steuereinheit vorgegebenen Parameter erfolgt.

Die Luft wird hierbei aufgrund des Venturieffektes angesaugt, wobei die zweite Luftzuleitung 8 einerseits mit der Dampfzuleitung 7 und andererseits mit dem zweiten Luftventil 10 fluidleitend verbunden ist und das zweite Luftventil 10 gegenüber der umgebenden Atmosphäre geöffnet werden kann, so dass Luft aus dem Umgebungsbereich angesaugt wird. In der Aufschäumkammer 5 erfolgt somit die Vermischung von Milch, Dampf und Luft, so dass ein Schaum erzeugt wird, der aufgrund des zugeführten Dampfes erwärmt ist. Der warme Milchschaum wird über den Auslass 5a in die Tasse 11 ausgegeben.

In einem weiteren in der Speichereinheit der Steuereinheit 9 abgespeicherten Aufschäummodus sind zwei Wertepaare jeweils zur Steuerung der Pumpe, des Dampfgenerators und des Luftventils vorgegeben und für jedes Wertepaar ist zusätzlich eine Zeitdauer angegeben. Wählt der Benutzer diesen Aufschäummodus aus, so wird zunächst für die erste vorgegebene Zeitdauer eine Steuerung gemäß dem ersten Wertepaar und anschließend für die zweite vorgegebene Zeitdauer eine Steuerung gemäß des zweiten Wertepaares ausgeführt, so dass ein Schaumprodukt mit zwei Schichten mit unterschiedlicher Schaumart entsteht.

Das Luftventil 3b ist ebenfalls derart angeordnet, dass Luft aus der umgebenden Atmosphäre ansaugbar ist.

## Patentansprüche

1. Vorrichtung zum Aufschäumen eines flüssigen Lebensmittels, insbesondere von Milch,
umfassend eine Pumpe (2), welche saugseitig eine mit einem Vorratsbehältnis für das flüssige Lebensmittel fluidleitend verbindbare Förderleitung (3) aufweist,
wobei saugseitig der Pumpe (2) im Flussweg des flüssigen Lebensmittels eine Luftzuleitung (3a) angeordnet ist, mittels derer Luft dem Lebensmittel zuführbar ist und stromabwärts der Pumpe(2)im Flussweg des Lebensmittels eine Drossel (4a) angeordnet ist,
**dadurch gekennzeichnet,**
**dass** die Vorrichtung eine Steuereinheit (9) und die Luftzuleitung (3a) ein mittels der Steuereinheit (9) steuerbares Luftventil (3b) umfasst und das Luftventil (3b) ein intermittierendes Luftventil (3b) ist, bei dem mittels der Steuereinheit (9) wahlweise mindestens ein Zustand mit hohem Luftdurchfluss und ein Zustand mit demgegenüber geringerem Luftdurchfluss und/oder mit keinem Luftdurchfluss vorgebbar ist und Steuereinheit (9) und Luftventil (3b) derart zusammenwirkend ausgestaltet sind, dass der mittlere Luftdurchfluss des Luftventils (3b) durch wiederholtes Umschalten zwischen den mindestens zwei Zuständen des Luftventils (3b) steuerbar ist.

2. Vorrichtung nach Anspruch 1,
**dadurch gekennzeichnet,**
**dass** das Luftventil (3b) einen im wesentlichen geschlossenen und einen geöffneten Zustand aufweist und Steuereinheit (9) und Luftventil (3b) derart ausgeführt sind, dass durch wiederholtes Umschalten zwischen geschlossenem und geöffnetem Zustand des Luftventils (3b) der mittlere Luftdurchfluss des Luftventils (3b) steuerbar ist, vorzugsweise ist das Luftventil (3b) als Magnetventil ausgeführt.

3. Vorrichtung nach mindestens einem der vorangegangenen Ansprüche,
**dadurch gekennzeichnet,**
**dass** Steuereinheit (9) und Luftventil (3b) derart zusammenwirkend ausgestaltet sind, dass der mittlere Luftdurchfluss des Luftventils (3b) steuerbar ist durch Vorgabe einer Umschaltfrequenz, mit der zwischen den mindestens zwei Zuständen des Luftventils (3b) umgeschaltet wird und/oder einem Tastverhältnis zwischen den mindestens zwei Zuständen, insbesondere,
**dass** Luftventil (3b) und Steuereinheit (9) derart ausgeführt sind, dass mittels der Steuereinheit (9) eine Umschaltfrequenz im Bereich von 1 Hz bis 50 Hz, vorzugsweise 1 Hz bis 20 Hz, im Weiteren vorzugsweise im Bereich von 5 Hz bis 15 Hz, insbesondere eine Frequenz von etwa 10 Hz vorgebbar ist.

4. Vorrichtung nach Anspruch 2 und Anspruch 3,
**dadurch gekennzeichnet,**
**dass** Luftventil (3b) und Steuereinheit (9) derart ausgeführt sind, dass mittels der Steuereinheit (9) ein Tastverhältnis zwischen geöffnetem und geschlossenem Zustand des Luftventils (10) von DC 2 % bis DC 90 %, vorzugsweise von DC 5 % bis DC 70 % vorgebbar ist.

5. Vorrichtung nach mindestens einem der Ansprüche 3 bis 4,
**dadurch gekennzeichnet,**
**dass** die Steuereinheit (9) eine Speichereinheit zur Speicherung mindestens eines Aufschäummodus umfasst, wobei der Aufschäummodus eine Umschaltfrequenz und/oder ein Tastverhältnis umfasst, insbesondere,
**dass** mindestens einen Aufschäummodus zwei unterschiedliche Werte für die Umschaltfrequenz und/oder das Tastverhältnis umfasst, wobei jedem Wert bzw. jedem Wertepaar eine Zeitdauer zu dessen Anwendung zugeordnet ist.

6. Vorrichtung nach mindestens einem der vorangegangenen Ansprüche,
**dadurch gekennzeichnet,**
**dass** die Steuervorrichtung mit der Pumpe (2) verbunden und diese derart zusammenwirkend ausgestaltet sind, dass die Fördermenge der Pumpe (2) mittels der Steuervorrichtung steuerbar ist, und/oder dass die Pumpe (2) eine Zahnradpumpe ist.

7. Vorrichtung nach Anspruch 6 und Anspruch 5,
**dadurch gekennzeichnet,**
**dass** der Aufschäummodus zusätzlich eine Aufschäumdauer für den gesamten Aufschäumvorgang umfasst, vorzugsweise, dass der Aufschäummodus zusätzlich eine Aufschäumdauer und mindestens eine Förderleistung der Pumpe (2) umfasst.

8. Vorrichtung nach mindestens einem der vorangegangenen Ansprüche,
**dadurch gekennzeichnet,**
**dass** die Drossel (4a) als steuerbare Drossel (4a) und derart mit der Steuereinheit (9) zusammenwirkend ausgebildet ist, dass mittels der Steuereinheit (9) wahlweise zumindest zwei unterschiedliche Durchflussquerschnitte für das die Drossel (4a) durchströmende flüssige Lebensmittel vorgebbar sind.

9. Vorrichtung nach mindestens einem der vorangegangenen Ansprüche,
**dadurch gekennzeichnet,**
**dass** die Vorrichtung zusätzlich eine Aufschäumkammer (5) und eine Dampfzuleitung (7) umfasst,
wobei Dampfzuleitung - gegebenenfalls über weitere Zuleitungen - mit der Aufschäumkammer (5) fluidleitend verbunden ist und die Drossel (4a) stromabwärts des Flussweges des flüssigen Lebensmittels mit der Aufschäumkammer (5) fluidleitend verbunden ist,
insbesondere,
**dass** die Vorrichtung zusätzlich eine mittels eines zweiten Luftventils (10) wahlweise verschließbare zweite Luftzuleitung (8) umfasst, wobei die zweite Luftzuleitung - gegebenenfalls über weitere Zuleitungen - mit der Aufschäumkammer (5) fluidleitend verbunden ist und
das zweite Luftventil (10) derart mit der Steuereinheit (9) zusammenwirkend ausgestaltet ist, dass mittels der Steuereinheit (9) die Luftzufuhr über die zweite Luftzuleitung (8) wahlweise vorgebbar ist.

10. Vorrichtung nach Anspruch 9,
**dadurch gekennzeichnet,**
**dass** das zweite Luftventil (10) ein intermittierendes Luftventil (3b) ist, bei dem mittels der Steuereinheit (9) wahlweise mindestens ein Zustand mit hohem Luftdurchfluss und ein Zustand mit demgegenüber geringerem Luftdurchfluss und/oder mit keinem Luftdurchfluss vorgebbar ist und Steuereinheit (9) und zweitem Luftventil (10) derart zusammenwirkend ausgestaltet sind, dass der mittlere Luftdurchfluss des zweiten Luftventils (10) durch wiederholtes Umschalten zwischen den mindestens zwei Zuständen des zweiten Luftventils (10) steuerbar ist.

11. Verfahren zum Aufschäumen eines flüssigen Lebensmittels, insbesondere von Milch,
wobei mittels einer Pumpe (2), welche saugseitig eine mit einem Vorratsbehältnis für das flüssige Lebensmittel fluidleitend verbundene Förderleitung (3) aufweist, das flüssige Lebensmittel gefördert wird, wobei mittels einer saugseitig der Pumpe (2) im Flussweg des flüssigen Lebensmittels angeordneten Luftzuleitung (3a) Luft dem Lebensmittel zugeführt wird und stromabwärts der Pumpe (2) das flüssige Lebensmittel durch eine Drossel (4a) geleitet wird,
**dadurch gekennzeichnet,**
**dass** mittels einer Steuereinheit (9) ein intermittierendes Luftventil (3b) der Luftzuleitung (3a) zwischen mindestens einem Zustand mit hohem Luftdurchfluss und einem Zustand mit demgegenüber geringerem Luftdurchfluss und/oder mit keinem Luftdurchfluss wiederholt umgeschaltet wird, zur Steuerung des mittleren Luftdurchflusses des Luftventils (3b).

12. Verfahren nach Anspruch 11,
**dadurch gekennzeichnet,**
**dass** bei der Regelung des Luftventils (3b) mittels der Steuereinheit (9) zwischen einem offenen und einem im Wesentlichen geschlossenen Zustand wiederholt umgeschaltet wird, vorzugsweise,
**dass** mittels der Steuereinheit (9) eine Schaltfrequenz und/oder ein Tastverhältnis zwischen offenen und geschlossenen Zuständen vorgegeben wird.

13. Verfahren nach mindestens einem der Ansprüche 11 bis 12,
**dadurch gekennzeichnet,**
**dass** während eines Aufschäumvorgangs der Luftdurchfluss des Luftventils (3b) nach einem in der Steuereinheit (9) vorgegebenen Verlauf verändert wird.

14. Verfahren nach mindestens einem der Ansprüche 11 bis 13,
**dadurch gekennzeichnet,**
**dass** stromabwärts der Drossel (4a) das flüssige Lebensmittel in eine Aufschäumkammer (5) geleitet wird, wobei
zur Erzeugung von heißem Milchschaum einer Aufschäumkammer (5) zumindest Dampf mittels einer Dampfzuleitung (7) zugeführt wird und
zur Erzeugung von kaltem Milchschaum dem flüssigen Lebensmittel saugseitig der Pumpe (2) mittels der Luftzuleitung (3a) Luft zugeführt wird und das flüssige Lebensmittel über die Aufschäumkammer (5) ohne Zuführung von Dampf ausgegeben wird,
insbesondere,
**dass** zur Erzeugung von heißem Milchschaum der Aufschäumkammer (5) Luft mittels einer zweiten Luftzuleitung druckseitig der Pumpe zugeführt wird.

15. Verfahren nach Anspruch 14,
**dadurch gekennzeichnet,**
**dass** zur Erzeugung von heißem Milchschaum die Drossel (4a) geöffnet wird und zur Erzeugung von kaltem Milchschaum die Drossel (4a) in einen drosselnden Zustand gesetzt wird, bei dem der Durchflussquerschnitt für das flüssige Lebensmittel durch die Drossel (4a) gegenüber dem geöffneten Zustand verringert ist.

## Claims

1. Device for foaming a liquid foodstuff, especially milk,
comprising a pump (2) which has, on the suction side, a feed line (3) able to make fluid-conducting connection with a storage container for the liquid foodstuff,
wherein on the suction side of the pump (2), in the path of flow of the liquid foodstuff, there is arranged an air-supply line (3a) by means of which air is suppliable to the foodstuff, and downstream of the pump (2), in the path of flow of the foodstuff, there is arranged a throttle (4a),
**characterised in that**
the device comprises a control unit (9) and the air-supply line (3a) comprises an air valve (3b), which is controllable by means of the control unit (9), and the air valve (3b) is an intermittent air valve (3b) for which, by means of the control unit (9), it is possible to specify selectively at least one state having a high through-flow of air and one state having a lower through-flow of air relative thereto and/or having no through-flow of air, and the control unit (9) and the air valve (3b) are arranged to co-operate in such a way that the average flow of air through the air valve (3b) is controllable by repeated switching-over between the at least two states of the air valve (3b).

2. Device according to claim 1,
**characterised in that**
the air valve (3b) has a substantially closed state and an opened state and the control unit (9) and the air valve (3b) are arranged in such a way that the average flow of air through the air valve (3b) is controllable by repeated switching-over between the closed and opened states of the air valve (3b), the air valve (3b) preferably being in the form of a solenoid valve.

3. Device according to at least one of the preceding claims,
**characterised in that**
the control unit (9) and the air valve (3b) are arranged to co-operate in such a way that the average flow of air through the air valve (3b) is controllable by specifying the switch-over frequency with which a switch-over is made between the at least two states of the air valve (3b) and/or a pulse duty factor between the at least two states, especially
that the air valve (3b) and the control unit (9) are arranged in such a way that, by means of the control unit (9), a switch-over frequency in the range of from 1 Hz to 50 Hz, preferably from 1 Hz to 20 Hz, especially in the range of from 5 Hz to 15 Hz, more especially a frequency of about 10 Hz, is specifiable.

4. Device according to claim 2 and claim 3,
**characterised in that**
the air valve (3b) and the control unit (9) are arranged in such a way that, by means of the control unit (9), a pulse duty factor between the opened and closed states of the air valve (10) of from DC 2 % to DC 90 %, preferably from DC 5 % to DC 70 %, is specifiable.

5. Device according to at least one of claims 3 and 4,
**characterised in that**
the control unit (9) comprises a memory unit for storing at least one foaming mode, the foaming mode comprising a switch-over frequency and/or a pulse duty factor,
especially
that at least one foaming mode comprises two different values for the switch-over frequency and/or the pulse duty factor, each value or each pair of values being assigned a time period for the application thereof.

6. Device according to at least one of the preceding claims,
**characterised in that**
the control device is connected to the pump (2) and the latter are arranged to co-operate in such a way that the delivery volume of the pump (2) is controllable by means of the control device, and/or the pump (2) is a gear pump.

7. Device according to claim 6 and claim 5,
**characterised in that**
the foaming mode comprises, in addition, a foaming period for the entire foaming operation, preferably
the foaming mode comprises, in addition, a foaming period and at least one delivery volume of the pump (2).

8. Device according to at least one of the preceding claims,
**characterised in that**
the throttle (4a) is in the form of a controllable throttle (4a) and is arranged to co-operate with the control unit (9) in such a way that, by means of the control unit (9), at least two different through-flow cross-sections for the liquid foodstuff flowing through the throttle (4a) are specifiable selectively.

9. Device according to at least one of the preceding claims,
**characterised in that**
the device comprises, in addition, a foaming chamber (5) and a steam-supply line (7),
wherein the steam-supply line - optionally by way of further supply lines - is in fluid-conducting connection with the foaming chamber (5), and the throttle (4a) is in fluid-conducting connection with the foaming chamber (5) downstream of the path of flow of the liquid foodstuff,
especially
that the device comprises, in addition, a second air-supply line (8) closable selectively by means of a second air valve (10), the second air-supply line - optionally by way of further supply lines - being in fluid-conducting connection with the foaming chamber (5), and the second air valve (10) is arranged to co-operate with the control unit (9) in such a way that, by means of the control unit (9), the supply of air by way of the second air-supply line (8) is specifiable selectively.

10. Device according to claim 9,
**characterised in that**
the second air valve (10) is an intermittent air valve (3b) for which, by means of the control unit (9), at least one state having a high through-flow of air and one state having a lower through-flow of air relative thereto and/or having no through-flow of air is specifiable selectively and the control unit (9) and the second air valve (10) are arranged to co-operate in such a way that the average flow of air through the second air valve (10) is controllable by repeated switching-over between the at least two states of the second air valve (10).

11. Method of foaming a liquid foodstuff, especially milk,
wherein the liquid foodstuff is fed by means of a pump (2) which has, on the suction side, a feed line (3) in fluid-conducting connection with a storage container for the liquid foodstuff,
air being supplied to the foodstuff by means of an air-supply line (3a) arranged on the suction side of the pump (2) in the path of flow of the liquid foodstuff, and the liquid foodstuff being passed through a throttle (4a) downstream of the pump (2),
**characterised in that**
by means of a control unit (9) an intermittent air valve (3b) of the air-supply line (3a) is repeatedly switched over between at least one state having a high through-flow of air and one state having a lower through-flow of air relative thereto and/or having no through-flow of air to control the average flow of air through the air valve (3b).

12. Method according to claim 11,
**characterised in that**
for regulation of the air valve (3b), by means of the control unit (9) a repeated switch-over is made between an open state and a substantially closed state, preferably
by means of the control unit (9) a switching frequency and/or a pulse duty factor between the open and closed states is specified.

13. Method according to at least one of claims 11 and 12,
**characterised in that**
during a foaming operation, the flow of air through the air valve (3b) is changed in accordance with a regime specified in the control unit (9).

14. Method according to at least one of claims 11 to 13,
**characterised in that**
downstream of the throttle (4a) the liquid foodstuff is passed into a foaming chamber (5),
wherein, for generating hot milk foam, at least steam is supplied to a foaming chamber (5) by means of a steam-supply line (7) and, for generating cold milk foam, air is supplied to the liquid foodstuff on the suction side of the pump (2) by means of the air-supply line (3a), and the liquid foodstuff is dispensed by way of the foaming chamber (5) without supply of steam,
especially
for generating hot milk foam, air is supplied to the foaming chamber (5) on the pressure side of the pump by means of a second air-supply line.

15. Method according to claim 14,
**characterised in that**
for generating hot milk foam, the throttle (4a) is opened and for generating cold milk foam the throttle (4a) is set to a throttling state in which the through-flow cross-section for the liquid foodstuff through the throttle (4a) is reduced relative to the opened state.

## Revendications

1. Dispositif destiné à faire mousser un aliment liquide, en particulier du lait,
comprenant une pompe (2) qui présente, côté aspiration, un conduit de refoulement (3) pouvant être mis en communication fluidique avec un récipient de réserve dédié audit aliment liquide,
un conduit (3a) d'amenée d'air, au moyen duquel de l'air peut être délivré à l'aliment, étant situé sur le trajet d'écoulement dudit aliment liquide, côté aspiration de la pompe (2), et un étranglement (4a) étant situé sur ledit trajet d'écoulement de l'aliment liquide, en aval de ladite pompe (2),
**caractérisé par le fait**
**que** ledit dispositif est muni d'une unité de commande (9), et le conduit (3a) d'amenée d'air comporte une vanne d'air (3b) pouvant être pilotée au moyen de ladite unité de commande (9), ladite vanne d'air (3b) étant une vanne d'air (3b) à action intermittente dans laquelle, au moyen de ladite unité de commande (9), il est sélectivement possible de préétablir au moins un état à fort débit d'air, et un état à débit d'air comparativement plus faible et/ou sans aucun débit d'air, l'unité de commande (9) et la vanne d'air (3b) étant conçues pour coopérer de façon telle que le débit d'air moyen de la vanne d'air (3b) puisse être commandé par commutation répétitive entre les deux états à présence minimale de ladite vanne d'air (3b).

2. Dispositif selon la revendication 1,
**caractérisé par le fait**
**que** la vanne d'air (3b) présente un état essentiellement fermé et un état ouvert, l'unité de commande (9) et ladite vanne d'air (3b) étant réalisées de telle sorte que le débit d'air moyen de la vanne d'air (3b) puisse être commandé par commutation répétitive entre les états fermé et ouvert de ladite vanne d'air (3b), laquelle vanne d'air (3b) est réalisée, de préférence, sous la forme d'une vanne magnétique.

3. Dispositif selon au moins l'une des revendications précédentes,
**caractérisé par le fait**
**que** l'unité de commande (9) et la vanne d'air (3b) sont conçues pour coopérer de façon telle que le débit d'air moyen de la vanne d'air (3b) puisse être commandé par préétablissement d'une fréquence de commutation avec laquelle une commutation s'opère entre les deux états à présence minimale de ladite vanne d'air (3b), et/ou d'un rapport de commutations entre lesdits deux états à présence minimale,
sachant notamment
**que** la vanne d'air (3b) et l'unité de commande (9) sont réalisées de telle sorte qu'il soit possible de préétablir, au moyen de ladite unité de commande (9), une fréquence de commutation située dans la plage de 1 Hz à 50 Hz, de préférence de 1 Hz à 20 Hz, dans la plage de 5 Hz à 15 Hz avec préférence optimale, en particulier une fréquence d'environ 10 Hz.

4. Dispositif selon la revendication 2 et la revendication 3,
**caractérisé par le fait**
**que** la vanne d'air (3b) et l'unité de commande (9) sont réalisées de telle sorte qu'il soit possible de préétablir au moyen de ladite unité de commande (9), entre les états ouvert et fermé de ladite vanne d'air (3b), un rapport de commutations (DC) de 2% à 90%, de préférence de 5% à 70%.

5. Dispositif selon au moins l'une des revendications 3 à 4,
**caractérisé par le fait**
**que** l'unité de commande (9) comporte une unité de mémorisation conçue pour mémoriser au moins un mode moussage, ledit mode moussage englobant une fréquence de commutation et/ou un rapport de commutations,
sachant notamment
**qu'**au moins un mode moussage embrasse deux valeurs différentes pour ladite fréquence de commutation et/ou ledit rapport de commutations, une durée d'utilisation étant respectivement affectée à chaque valeur, ou à chaque paire de valeurs.

6. Dispositif selon au moins l'une des revendications précédentes,
**caractérisé par le fait**
**que** le dispositif de commande est raccordé à la pompe (2), ces derniers étant conçus de façon telle que la quantité refoulée par ladite pompe (2) puisse être commandée au moyen dudit dispositif de commande, et/ou
**que** ladite pompe (2) est une pompe à engrenages.

7. Dispositif selon la revendication 6 et la revendication 5,
**caractérisé par le fait**
**que** le mode moussage englobe, additionnellement, une durée de moussage assignée à l'intégralité du processus de moussage, sachant que, de préférence, ledit mode moussage englobe additionnellement une durée de moussage et au moins une capacité de refoulement de la pompe (2).

8. Dispositif selon au moins l'une des revendications précédentes,
**caractérisé par le fait**
**que** l'étranglement (4a) se présente comme un étranglement commandable (4a), et est réalisé pour coopérer avec l'unité de commande (9) de façon telle qu'il soit possible de préétablir sélectivement, au moyen de ladite unité de commande (9), au moins deux sections d'écoulement différentes dévolues à l'aliment liquide franchissant ledit étranglement (4a).

9. Dispositif selon au moins l'une des revendications précédentes,
**caractérisé par le fait**
**que** ledit dispositif comprend, additionnellement, une chambre de moussage (5) et un conduit (7) d'amenée de vapeur,
ledit conduit d'amenée de vapeur étant en communication fluidique avec ladite chambre de moussage (5) - le cas échéant, par l'intermédiaire d'autres conduits d'amenée -, et l'étranglement (4a) étant en communication fluidique avec ladite chambre de moussage (5) en aval du trajet d'écoulement de l'aliment liquide,
sachant notamment
**que** ledit dispositif est additionnellement pourvu d'un second conduit (8) d'amenée d'air, pouvant être sélectivement obturé au moyen d'une seconde vanne d'air (10), ledit second conduit d'amenée d'air étant en communication fluidique avec ladite chambre de moussage (5) - le cas échéant, par l'intermédiaire d'autres conduits d'amenée -, et
ladite seconde vanne d'air (10) étant conçue pour coopérer avec l'unité de commande (9) de façon telle que la délivrance d'air puisse être sélectivement préétablie par l'intermédiaire dudit second conduit (8) d'amenée d'air, au moyen de ladite unité de commande (9).

10. Dispositif selon la revendication 9,
**caractérisé par le fait**
**que** la seconde vanne d'air (10) étant une vanne d'air (10) à action intermittente dans laquelle, au moyen de l'unité de commande (9), il est sélectivement possible de préétablir au moins un état à fort débit d'air, et un état à débit d'air comparativement plus faible et/ou sans aucun débit d'air, l'unité de commande (9) et la seconde vanne d'air (10) étant conçues pour coopérer de façon telle que le débit d'air moyen de la seconde vanne d'air (10) puisse être commandé par commutation répétitive entre les deux états à présence minimale de ladite seconde vanne d'air (10).

11. Procédé destiné à faire mousser un aliment liquide, en particulier du lait,
ledit aliment liquide étant refoulé au moyen d'une pompe (2) équipée, côté aspiration, d'un conduit de refoulement (3) en communication fluidique avec un récipient de réserve dédié audit aliment liquide,
de l'air étant délivré à l'aliment au moyen d'un conduit (3a) d'amenée d'air situé sur le trajet d'écoulement dudit aliment liquide, côté aspiration de la pompe (2), et ledit aliment liquide étant guidé pour franchir un étranglement (4a), en aval de ladite pompe (2), **caractérisé par le fait**
**qu'**une vanne d'air (3b) à action intermittente associée au conduit (3a) d'amenée d'air est répétitivement commutée, au moyen d'une unité de commande (9), entre au moins un état à fort débit d'air et un état à débit d'air comparativement plus faible, et/ou sans aucun débit d'air, en vue de commander le débit d'air moyen de ladite vanne d'air (3b).

12. Procédé selon la revendication 11,
**caractérisé par le fait**
**qu'**une commutation entre un état ouvert et un état essentiellement fermé s'opère répétitivement, lors de la régulation de la vanne d'air (3b) au moyen de l'unité de commande (9), sachant de préférence
**qu'**une fréquence de commutation et/ou un rapport de commutations, entre lesdits états ouvert et fermé, est (sont) préétabli(e)(s) au moyen de ladite unité de commande (9).

13. Procédé selon au moins l'une des revendications 11 à 12,
**caractérisé par le fait**
**que** le débit d'air de la vanne d'air (3b) est modifié, au cours d'un processus de moussage, d'après une allure préétablie dans l'unité de commande (9).

14. Procédé selon au moins l'une des revendications 11 à 13,
**caractérisé par le fait**
**que** l'aliment liquide est introduit dans une chambre de moussage (5) en aval de l'étranglement (4a), sachant que,
pour produire de l'écume de lait chaude, au moins de la vapeur est délivrée à une chambre de moussage (5) au moyen d'un conduit (7) d'amenée de vapeur, et que,
pour produire de l'écume de lait froide, de l'air est délivré audit aliment liquide au moyen du conduit (3a) d'amenée d'air, côté aspiration de la pompe (2), puis ledit aliment liquide est distribué par l'intermédiaire de ladite chambre de moussage (5), sans délivrance de vapeur,
sachant notamment
**que**, pour produire de l'écume de lait chaude, de l'air est délivré à ladite chambre de moussage (5) côté pression de ladite pompe, au moyen d'un second conduit d'amenée d'air.

15. Procédé selon la revendication 14,
**caractérisé par le fait**
**que** l'étranglement (4a) est ouvert pour produire de l'écume de lait chaude et, pour produire de l'écume de lait froide, ledit étranglement (4a) est amené à un état d'étranglement dans lequel la section transversale d'écoulement dévolue à l'aliment
liquide est réduite, par ledit étranglement (4a), vis-à-vis de l'état ouvert.
